# EUROPEAN PATENT APPLICATION

(11) **EP 1 536 353 A1**
(43) Date of publication of application: **01.06.2005**
(21) Application number: 03027418.7
(22) Date of filing: 27.11.2003
(51) Int. Cl.: G06F 17/60

(54) **Method and device for operating an online shop with customized price generation**

(71) Applicant: Schneider, Michael R., 80995 München (DE)
(72) Inventor: Schneider, Michael R., 80995 München (DE)
(74) Representative: Becker Kurig Straus

(57) **Abstract**

The present invention provides a method and device for operating an online shop with a possibility for a customized price generation. The method according to the present invention comprises receiving a customer-identification (10), receiving a non-binding order (12) generating and sending a price offer for said non-binding order (16). The method further comprises receiving a rejection of said price offer (18) and receiving a bid price for said order (20). The method further comprises determining a lowest acceptable price for present customer-order combination (22), based on available actual-stock data and based on customer-history data and accepting said bid price (24), if said bid price exceeds said determined lowest acceptable price; and sending a confirmation for said order (28).

## Description

The present invention provides a method and device for operating an online shop with a possibility for a customized or adapted price generation. The present invention discloses a method that allows online shop systems with built-in vendor's commodities management and calculation systems to determine and calculate prices in real time and react to the price desired by a customer, and devices and a system to perform such method. Further, the invention pertains to systems for including price adaptation features into common online shop systems with alleged fixed price basis.

Currently, online shop systems do not enable customer-shop system interaction in the field of price fixing. Prices are fixed within the shop systems and the commodity management of the vendor. The customer can only influence the price through selection and quantity of the articles ordered. This results in multiple disadvantages for both parties involved in the transaction. This way of shopping is not very attractive for customers who would like to negotiate a price. The vendor is unable to implement his possibly reduced price dynamically. The vendor is also permanently subjected to the pressure of price search engines and price agents. The customer's loyalty is and remains low. Good and not good customers are being treated alike.

Such online shop devices are already known from WO 01/33464 Al. This document discloses a method and a system for automated electronic procurement of services, products, and bundles. The method provides a demand based, information specific negotiation process. Customers can initiate bidding with selected sellers in the system in a multivariate format based on numeral factors. Detailed information on services and products are available for the customer in order to make informed petitions. The system consists of four main modules: registration, information, procurement, and transaction and post sale processing.

The documents DE 102 10 077 A1 and DE 198 49 354 A1 are also related to the technical field of online shopping.

In present online shop architectures, customers and also vendors have no ability to incorporate movement and changes of prices in an automated and convenient manner. It is desirable to enable a vendor to provide a customer with a specific and customized set of vending parameters.

According to a first aspect of the present invention, there is provided a method for operating an online shop and generating customized or adapted prices. The method comprises receiving a customer-identification, receiving a non-binding order, generating and sending a price offer for said non-binding order. The method further comprises receiving a rejection of said price offer and receiving a bid price for said order. The method further comprises determining a lowest acceptable price for present customer-order combination, based at least on available actual-stock data and available customer-history data, accepting said bid price, if said bid price exceeds said determined lowest acceptable price, and sending a confirmation for said order.

By receiving an identification of a customer, from a connected user device, a visitor of an online shop becomes at least a potential customer. The steps necessary to connect to an online shop are not described in detail such as receiving a data communication connection to a user device.

It may be noted that the identification of the visitor/customer may also be performed at any other point in time, but at least with the rejection of the price offer. The customer identification can be performed according to the state of the art by a login procedure or by a determining that the connected customer is a new customer and subsequently performing a registration procedure to obtain a user-identification.

By receiving data representing a non-binding order a user presents a desired cart of services or goods selected from e.g. an online catalogue. The expression "non-binding order" has been chosen to refer to the contents of the "cart" feature of known Internet shops or online shopping applications used for collecting selected goods or services. The non-binding order can comprise goods and/or services. The non-binding order can be presented as a list or as a mosaic of pictures to better reflect the goods that have been selected.

The price offer for said non-binding order can be generated in a conventional manner by, summing up the selected items and adding postage and packing or freight charges or by allowing a discount if payment is made in cash within e.g. ten days. The price offer may be broken down for shipping costs for different postage and packing and payment conditions. The price offer for said non-binding order could be sent together with data representing said received non-binding order to the customer. The customer can easily recognize which costs are incurred and caused by which item or by which quantity.

At this point the acceptance of the price offer by the user followed by confirming and finalizing the order represents the state of the art in online shopping.

By receiving a rejection of said price offer however, the vendor or the online shop receives a signal that the offered price for the non-binding order is exceeds a maximum limit or a too-expensive-threshold of the customer. It may be noted that the expression "vendor" is used in the following to refer to a server of an online shop, and only in particular cases to a human person working at the shop.

Basically, compared with the state of the art, the present invention starts at a point a normal online purchase has already failed, i.e. at a point the vendor receives a rejection of a conventionally generated price offer for a non-binding order.

In the following, the expression "price offer" is used for a price proposed by the online vendor and the term "bid price" is used for a price bid proposed by the customer.

By receiving a bid price for a particular order the vendor can judge a potential price a customer may be willing to pay for a good or a service. The bid price provided by a customer can be a binding or non-binding bid price, i.e. the customer may express his intention to buy for a certain price or can express his intention to negotiate. Thus, the bid price can be combined with a confirmation or with a subjection to subsequent confirmation. To simplify the specification the in the following all bid prices may be regarded as binding price bids or as bid prices, that may be non-binding.

Basically, the received bid price can be used by human vendor to decide if the bid price is profitable, if the bid price is ensure that the estimates cover the true costs, or that a bid price does not cover the true costs.

The present invention provides a method to ensure that a bid price of a customer can be evaluated automatically to provide a basis for an automated acceptation or an automated rejection of a bid price received from a customer.

The present method determines a lowest acceptable price for present customer-order combination, based on available actual-stock data and customer-history data. The vendor generates or calculates the lowest possible, profitable price for a determined customer-order combination to fix a lowest acceptable limit for the order. In case of a new or unknown customer the lowest limit may be determined by a minimum profit. In the case of a new customer, the limit may be determined by a standard set of values for the customer-history data, i.e. a standard customer history. It is also possible to use an average of all one-time customers to specify the history data for an average first-time customer.

It may be noted that depending on the customer-history, different lowest acceptable prices are achieved for the same order for different customers. The lowest acceptable price can also consider the actual stock, resulting in different lowest acceptable prices for different stockpiles. Thus, the same order ordered by equal customers may result in different lowest acceptable prices. The lowest acceptable price depends on at least three, basically independent parameters or parameter groups, that are represented on one hand by a customer, on the other hand by an order, and finally on the present stock.

The customer and the history of the commercial relationship to the vendor can reduce the lowest acceptable price if the customer is a regular customer providing a reliable and predictable turnover. The customer, and the history of the commercial relationship to the vendor, can raise the lowest acceptable price, if the customer pays only after the first or second on demand.

It is also possible to use other price-influencing parameters such as the actual pricing of the competition. It is for example possible, to couple the generation of the actual lowest price also to an actual stock market price of a raw material of a product. It may also be possible to incorporate different other parameters to the generation of a price such as e.g. incase of sport event related products this parameters can comprise e.g. an actual score in a champion ship. It is also be possible to incorporate shop parameters such as the total turnover of a quarter. The parameters can also comprise shop history data, to obtain and use supply and demand data e.g. for seasonally available goods, to generate the lowest acceptable price.

By automatically accepting the bid price, if said bid price exceeds said determined lowest acceptable price, the vendor can automate the negotiations with customers without the danger of becoming unprofitable.

By sending a confirmation for said order the vendor can end the negotiations. In case of a binding bid price the vendor can send the confirmation to finalize the transaction. In case of a non-binding demand the vendor can send a confirmation request for said order to the customer. In this case, the customer has to send a confirmation to finalize the deal separately.

In another example embodiment of the present invention the method further comprises generating an alternate price offer, based on said generated lowest acceptable price, if said bid price exceeds said determined lowest acceptable price and sending said alternate price offer to said identified customer.

By generating and sending an alternate price offer, the vendor can signalize the customer that the vendor is willing to enter negotiations, but that the demanded price is not acceptable, because it would not be profitable.

The generation of an alternate price offer may consider the difference between the lowest acceptable price and the bid price. It is also possible to take the difference between the price offer and the bid price into account. When arranging the parameters of an algorithm for generating said alternate price offer, it must be kept in mind that the aim of the negotiation resides in maximizing the profit of the vendor. It is not the aim of the present invention to strike every deal at the lowest acceptable price.

It is possible to implement a random selection into the generation of an alternate price offer, to prevent that a customer can easily determine the lowest acceptable price. A kind of random element is actually provided by actual stock parameter in used for generating the lowest acceptable price. The actual stock parameter can also be used for generating said alternate price offer, to randomize generation of said alternate offer parameter.

A random element can be used to prevent that a customer can determine the lowest acceptable price and subsequently minimize the profit of the vendor by reckoning back the actual valid lowest acceptable price.

In yet another example embodiment of the present invention the method further comprises receiving an acceptation of said alternate price offer and a confirmation of said order. This can represent another termination of the negotiations leading to a confirmation/finalization of the deal.

In just another example embodiment of the present invention the method further comprises receiving another rejection and an alternate bid price from the customer, generating an alternate lowest acceptable price and accepting said alternate bid price, if said alternate bid price exceeds said generated alternate lowest acceptable price, and sending a confirmation.

The received rejection of said alternate price offer opens an additional round in the negotiations, or can also represent an interruption of the negotiations. By receiving an alternate bid price or a subsequent bid price, a customer opens a subsequent round in the negotiations. The vendor reacts by generating an alternate or a subsequent lowest acceptable price, based on at least one of said received bid price, said alternate bid price, said generated lowest acceptable price, said price offer and said alternate price offer. The vendor can change the lowest acceptable price by adding e.g. a "negotiation surcharge". The alternate or subsequent lowest acceptable price, may not exceed one of the former price offers, to prevent that the customer is faced with increasing prices during negotiations.

The accepting of a received alternate bid price can be performed as described in the preceding specification, if said alternate bid price exceeds said generated alternate or subsequent lowest acceptable price, followed by sending a confirmation of said order.

By using subsequent lowest acceptable prices the customer is not provided with an advantage for negotiating said price. Thus a customer may not profit from prolonged negotiations, preventing that persistently negotiations are going to reach the lowest acceptable price.

In another example embodiment of the present invention the method further comprises receiving a subjection to confirmation. This means sending an offer to negotiate under a reservation, i.e. the actual negotiation can be separated from the actual confirmation of an order. For the actual placing of an order, to prevent that a user/customer confirms an order by placing a prize demand. The method can also comprise sending a subjection to confirmation, to the customer to negotiate without the danger of inadvertently performing a deal. The subjection to confirmation represents the difference between the above mentioned binding price offer and said non-binding price offers and said binding bid price and said non-binding bid prices.

In another example embodiment of the present invention the method further comprises sending and receiving data for log-in procedures. Log-in procedures can be used to simplify the access to customer identifications. Inversely, the method can also comprise sending and receiving data for log-off procedures.

In another example embodiment of the present invention the method further comprises sending of range of goods and/or range of service data. By sending range of goods data, e.g., the contents of an online catalogue can be transmitted over a communication or a data network. The data can be sent in form of a online data exchange wherein each said catalogue data comprising goods and or a range of goods/services, wherein the user can select one of said goods/services. It is also possible to send an electronic or a paper based catalogue by mail. It is not necessary for the customer to use an online catalogue, as the customer may have selected the goods/services from an electronic or paper-based catalogue such as from a compact disc (CD) catalogue.

In another example embodiment of the present invention the method further comprises sending an offer to present a bid price for said order. The by the vendor can offer or ask the customer to reveal his price limit or to take part in pricing.

In yet another example embodiment of the present invention the method further comprises sending an offer to change said non-binding order. By sending an offer to change the order, the vendor admits extended negotiations with the customer.

In another example embodiment of the present invention the method further comprises receiving an actualized non-binding order. By receiving an actualized non-binding order the vendor can restart the negotiations for an altered order, to extend the negotiations. The time a customer wastes in the online shop of vendor is not available for negotiations with a concurring online supplier.

In yet another example embodiment of the present invention the method further comprises, sending a finalization, of the order after a confirmation. The confirmation can be a vendor confirmation or a customer confirmation. The finalization can comprise the start of a postage and packing process.

In yet another example embodiment of the present invention the method further comprises, generating/updating customer-history data. In another example embodiment of the present invention the method further comprises, updating said actual-stock data. After finalization or after the termination of the negotiations the customer-history data are stored or updated to access the customer behavior. The customer behavior enables the vendor to generate and survey customer specific turnover rates and enables the vendor to generate a "customer values" i.e. parameters that are indicative of the trade relations of the online shop to the respective customer. If a deal has been finalized, the vendor can update his actual-stock data, to be able to provide the most actual data basis for subsequent negotiations. In case of simultaneous multi customer negotiations, it can be useful update the actual-stock data during the negotiations. Thereby, it can be assured that the online shop can always fulfill all binding or non-binding orders that are actually used in negotiations.

In yet another example embodiment of the present invention the method further comprises, sending common terms and conditions of trade and receiving an acceptation of said common terms and conditions of trade. Thereby the online shop can assure the actual customer vendor relationship is based on the laws of the country the online shop is located.

In another example embodiment of the present invention the method further comprises, outputting a confirmed order. The order may be printed in a storage room or in a post room to induce packing and mailing of the confirmed order.

According to another aspect of the present invention, a computer program product downloadable from a server for carrying out the method of the preceding description is provided, which comprises program code means for performing all of the steps of the preceding methods when said program is run on a computer or a network device.

According to yet another aspect of the invention, a computer program product is provided comprising program code means stored on a computer readable medium for carrying out the methods of the preceding description, when said program product is run on a computer or a network device.

The computer program and the computer program product can be distributed in different parts and devices of the network. The computer program and the computer product device run in different devices of the network or the online shop. Therefore, the computer program and the computer program device have to be different in abilities and source code.

According to another aspect of the present invention an online shop server with customized price generation system is provided that comprises at least a processing unit, a network interface, a customer identification component, a customer identification database, and a stock database, a customer-history database, a component for determining a lowest acceptable price for present customer-order combination, and a component for accepting/rejecting a received bid price.

The processing unit is provided for processing online shop data and customer interaction data.

The network interface is connected to said processing unit and to a data network. The network interface is provided to enable user and customers communicate with the online shop server for sending and receiving customer interaction data. The customer interaction data can include binding and non-binding orders, customer data, price offers, bid prices and rejections of said price offers and bid prices, respectively.

The customer identification component is connected to said network interface and to said processing unit. The customer identification component is connected to the customer identification database, to use stored customer identifications to perform identification-, log-in-, and log-out procedures.

The processing unit is configured for generating price offers for received non-binding orders is provided to generate catalogue-price based prices. Thus, the online shop server can sum up catalogue prices, calculate and add postage and packing, can grant standard bulk discounts, add administrative charges for customs clearance and the like.

The stock database is connected to said processing unit to store actual stock data, and to make the actual stock data available to the processing unit and indirectly to other components connected thereto. The stock data can be used to provide estimations regarding e.g. delivery time.

The customer-history database is connected to said processing unit. The customer-history database is provided to store the previously performed deals, user-specific turnover rates, and sales history. It is also possible to store or determine vendor/customer value parameters representing e.g. the percentage of the customer specific turnover to the overall turnover, periods for payment, and other trade relevant parameters.

The component for determining a lowest acceptable price for customer-order combinations. Said component is connected to said processing unit, to said stock database and to said customer-history database. The component for determining a lowest acceptable price for customer-order combinations based on available present-stock data and customer-history data. The customer-history data can refer to the absolute turnover of each identified customer. The customer-history data can also refer to the absolute turnover of each identified customer within a certain time period, such as e.g. the last quarter, the last 6-month or the last year.

The component for accepting/rejecting a received bid price is connected to said component for determining a lowest acceptable price, and to said processing unit. This component is provided to determine if a bid price exceed a determined lowest acceptable price, and to induce said processing unit to send a confirmation for said order, if said bid price exceeds said determined lowest acceptable price.

In another example embodiment said online shop server further comprises an alternate price offer generation component. The alternate prices offer generation component is connected to said component for determining a lowest acceptable price, to said component for accepting/rejecting a received bid price and to said processing unit. The alternate price offer generation component is provided to generate subsequent price offers for a particular customer-offer combination. The component for generating alternate price offers can be self-related to use data previous alternate price offers for generating a successive price offer.

It may be noted that the customer-history database can also comprise the number of negotiation stages or the number of exchanged of price offers and bid prices before a deal is made, to be able to predict a most probable negotiation course for future negotiations. With this information, the first offer can be placed in a way leaving enough space for further negotiations. The customer-history can be used to select the first price offer closer to the lowest acceptable price, if a customer usually accepts only short negotiations and does usually not send even a second bid price.

It is also possible to use the homeland of the customer to determine the first, the alternate, and successive offers, to consider the trading traditions in different countries. Thus, if the customer address is located in a country with a long trading tradition, then first offer may prepared in a way leaving enough place for further concessions.

It is also possible to use customer data related to the creditworthiness of a customer contributing to the generation of the lowest acceptable price for an order-customer combination. It is also possible to consider the reliability of available contractors for generating the lowest possible price.

In the following, the invention will be described in detail by referring to the enclosed drawings in which:
Figure 1 is a flowchart of a method for operating an online shop and generating customized prices from the vendors side of view according to one aspect of the present invention,
Figure 2 is an example of a method for interacting with an online shop having an customized price system from the customers side of view according to one aspect of the present invention; and
Figure 3 is an example of an online shop server with an integrated price determination system.

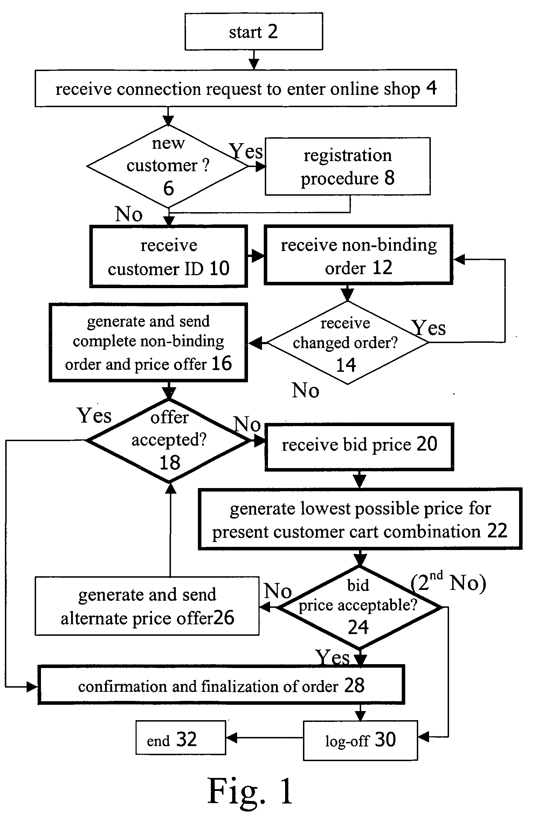

Figure 1 is a flowchart of an example embodiment of a method for operating an online shop and generating customized prices from the vendors side of view according to one aspect of the present invention:

The flowchart comprises boldly outlined boxes represent a kind of minimum requirement, and the slimly outlined boxes represent alternate embodiments and/or extra features.

The flowchart starts at the start box 2 i.e. a where the online shop connects to a communication network. In a next step a customer enters the online e.g. the Internet shop. The customer can enter the online shop e.g. by sending a connection request that is received 4 by the online shop or by polling data from an online catalogue. In the following the online shop is sometimes referred to as "the vendor". It may also be noted that the goods offered in said online shop might also comprise services.

The customer may browse e.g. an online catalogue, or browse different information pages or sites (not depicted). It may be estimated that the customer transmits a customer identification (ID) that is received 10 by the vendor. The customer identification can be transmitted during a conventional log-in procedure (not shown), or subsequently after a customer ID request 6 that may be followed by registration procedure 8.

During the visit of a customer it is estimated that the customer makes a selection of goods by for example clicking on buttons such as "add to cart" while browsing an online catalogue. This browsing leads to a selection of goods or services, i.e., provides a selection of goods or services a customer is interested in provided as a non-binding order (e.g. the virtual "cart" feature of online shops).

During the phase the customer can change the virtual cart contents or the non-binding order.

It is also possible that a customer has selected a number of goods in an offline catalogue during an offline browsing session, and finally sends only an order or a shopping list, as a kind of non-binding order.

The method can comprise feature or requests such as "continue shopping?" change non-binding order" 14 or go to cashier, or view shopping cart (or view non-binding order). In a next step, the customer transfers the data related to the selected goods e.g. by entering a buy cart content and transmitting the non-binding order.

The vendor receives said non-binding order and generates 16 a price based on the standard procedures for determining a price comprising features such as calculating the overall price of the selected goods or the cart contents. The standard procedures for determining a price can also comprise calculating different surcharges for different kinds of postage and packing, surcharges for duties, administrative charges for custom clearance or special discounts, bulk discounts or discounts for preferred payment procedures.

The calculated standard price is then sent as a price offer to the customer. In a next step the vendor can receive an acceptation or a rejection of said price offer 18.

If the customer accepts the total price the order is binding. If the vendor receives an acceptation, the vendor can confirm and finalize the order 28. The vendor can send a confirmation message comprising estimated delivery periods, caching modalities and the like. Finally a log-off procedure can be performed 30 and the method can be terminated 32.

The invention provides online shop system vendors with a method that allows their customers to either accept the total price of the goods selected or make the vendor an alternate offer. If the vendor receives a rejection, the vendor may send a request for a bid price of the i.e. or an upper price limit for the binding order. The bid price can represent a binding bid price i.e. a bid price that the vendor can accept by sending a confirmation to finalize the deal. The bid price can also represent a non-binding bid price i.e. a bid price that represents a negotiation under reservation the customer has to confirm subsequently.

Should the customer make an alternate offer in form of a bid price instead this price is being transferred to the shop system/the vendor. The vendor can receive 20 a bid price from the customer that represents the price the customer is willing to pay. That is the customer places an order offering a total price deviating from the normal price or the offered price.

The online shop server then generates 22 the lowest acceptable price for the present customer-order combination based on at least the actual stock data, and customer-history data. To be able to perform this, the vendor has to connect his own commodities management system to his online shop. Additionally, the vendor has to have an integrated price calculation in the commodities management system using various parameters. With this basic connection the vendor can access a profit and loss account specifically for the present order, and can calculate an absolute lowest possible price required for this offer to be profitable. For example the wholesale price of the order and a certain proportional share of the running costs of the online store or shop can represent this value.

In the same step the vendor calculates a customer scope of discount that can be related to several parameters such as the customer's financial credit-worthiness, the customer's history of orders, and other customer parameters. The customer's scope of discount is indicative of how far the vendor is prepared to let the customer approach the break-even point or the profitability limit during the negotiations.

The lowest possible price can be represented by an absolute cash value and the scope of discount value can be represented by a proportionality factor to be applied to the difference between the lowest possible price and the standard price offer. The combination of the lowest possible, the price offer and the customer's scope of discount represent a lowest acceptable price that the vendor is willing to accept for the order from said customer.

It may be noted that the customer ID may, in difference to the depicted flowchart, be determined or received later, but in the customer ID must be known to the online shop before the lowest acceptable price for a customer-order is determined or calculated.

The vendor commodities management system is connected to the shop system and receives the offer from the customer shopping cart and the customer's ID. Based on this information the system immediately calculates the customer's shopping cart in respect to several parameters such as the customer's financial credit-worthiness, the customer's history of orders, actual stock, durability of the goods, special offers, bulk discounts etc. and determines the lowest price for the order of the customer. This price is being compared to the offer received from the customer. Then the system can send a message (not shown) to the customer informing him whether the offer is being accepted or rejected.

In addition the calculation, changes the customer parameter or the order parameter can be carried out. In case of a new offer and calculation, this may make the initial lowest acceptable price unattainable. Thereby, even an extended negotiation will not end at the lowest acceptable price.

If the vendor accepts 24 the customer's bid price, the finalization stage of the order 28 can be encountered, and a confirmation of the order can be transmitted automatically.

If the vendor rejects the customer's bid price, the vendor may log-off 30 the customer. If the vendor rejects the customer's bid price, the customer may also generate and send an alternate offer 26. Preferably, the alternate price offer may be generated using the above-mentioned parameters, including the received bid price and received alternate bid prices. If the customer rejected the alternate offer, the customer may again send an alternate bid price. This actualized alternate bid price is once again being checked according to the technique described above for acceptation or rejection.

It is clear that the stages 18 to 26 can form a loop that can may lead to eternal negotiations, wherein two automated (if e.g. the customer also uses an automated negotiation system) devices start circling around the vendor's lowest acceptable price. To prevent that the negotiations end in a draw, the vendor may provide an automated logoff indicated by the arrow (marked with the "2^{nd} No") between the box 24 and the log-off box 30. The expression "2^{nd} No" is used to indicate that an automated logoff can be implemented at any number of received unacceptable prices that can be set by the vendor e.g. the first, second, fifth, or eleventh received unacceptable alternate bid price.

To prevent the customer from negotiating endlessly with the system the vendor may also implement the following boundaries: The customer may only make offers deviating from the normal price e.g. for a predetermined number of times. Also a parameter that is being transmitted with each individual offer may be raised with each new offer. This parameter influences price fixing following the criteria described above and thus encourages the customer to calculate the offer realistically, because only the first time (depending on the vendor's settings) the vendor will accept the lowest acceptable price.

After the logoff 30 the method is ended 32. Finally, or during the negotiation stage 18 to 26 the vendor updates his client database with all known data about his customers.

It is also possible to extend the flowchart by a customer authentication process, additionally to the customer identification and prior to the finalization of an online deal.

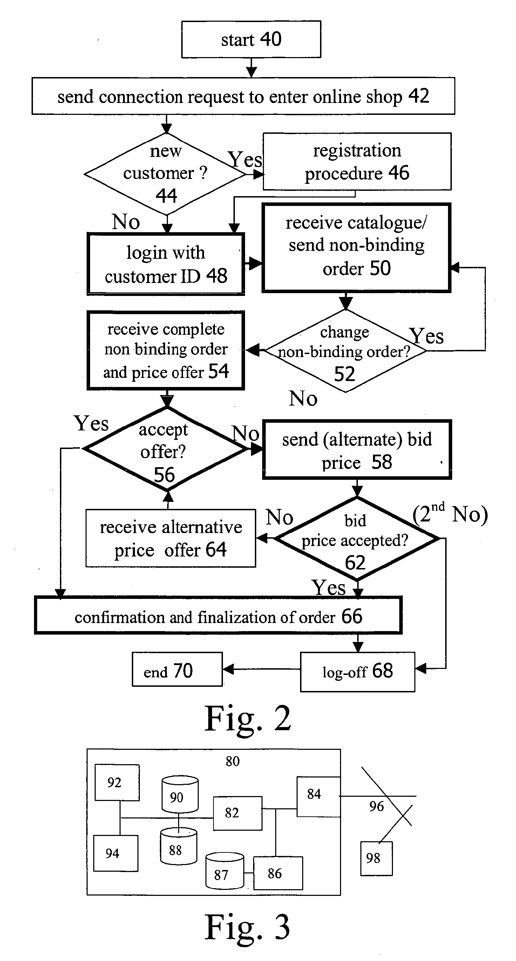

Figure 2 is an example of a method for interacting with an online shop having an customized price system from the customers side of view according to one aspect of the present invention. The depicted flowchart is basically the flowchart of figure 1 from the customer's side of view.

The reference sign number 40 starts the procedure. The customer enters 40 the vendor's online shop, sending a connection request or by requesting online catalogue data. Subsequently, the customer logs into the system using a customer ID 48 or by using a new customer request 44 and registration procedure 46. (The identification procedure might also take place later.)

In box 50 the customer reviews the vendor's online catalogue and selects the desired items. The selected items are being stored in the customer's shopping cart and send to the online-shop.

Once the customer has finished selecting (52) further items, the customer is being transferred to the check out site. There all the items contained in the shopping cart are listed.

The customer is now being provided with the prices of the selected items plus the shipping costs and thus the total price for his order 54.

At this point the customer may still make changes regarding the contents of the shopping cart.

Then the customer may enter a price deviating from the calculated price for his shopping cart, i.e. return to box 52.

The customer can selects whether to accept this offer for the order (to 66) at the calculated normal price or if to demand a lower price (to 58), i.e. notify the vendor about his intention to confirm the offer at his own bid price.

Subsequently, the customer can receive a confirmation of the order 66 from the vendor, if his offer was accepted or is being provided with the option to make a new offer if the initial offer was rejected. In the case of rejection the customer may either start once again at step 56 (not shown), leave the shop without having placed an order (not shown), or receive an alternate price offer from the vendor 64.

The reference numerals 56 to 64 represent a negotiation loop, as indicated in the in figure 1. If the vendor has send an alternate offer (64) to the rejection, the user can accept (to 66) or reject this alternate price offer. The negotiation loop is entered when the customer also rejects the alternate price offer, and sends an alternate or a subsequent bid price. The negotiation loop can be broken by a logoff 68, by a confirmation and finalization of the order 66, or by a new non-binding order 50 (a new selection of goods or services).

Finally, the customer leaves the shop by a log-off procedure 68, and the execution of the method of this flowchart ends 70.

Figure 3 is an example of an online shop server with an integrated price determination system. In figure 3 an online shop server 80 with an integrated price determination system connected to a data communication network 96 and a customer device 98, connected to said data communication network is shown 96.

The online shop server 80 is provided with a network interface 84, for sending and receiving customer interaction data. The including binding an non-binding orders, customer data, price offers, bid prices and rejection of said price offers and alternate bid prices, respectively, as e.g. described in figures 1 and 2.

The online shop server 80 can also be provided with a dedicated vendor terminal of a vendor interface. It is also possible to provide an implementation of the vendor interface via the network 96 and said network interface 84.

The online shop server 80 is also provided with a processing unit 82 for processing online shop data and customer interaction data. The processing unit 82 is connected to said network interface 84.

The online shop server also comprises a customer identification component connected to said network interface and to said processing unit to identify customers perform login/log-off procedures and to perform registration procedures. The customer identification component is connected to a customer identification database 87, to access customer identification data stored in said customer identification database 87.

A stock database 88 is provided in the online shop server 80. The stock database is, connected to said processing unit 82, and provided to store actual stock data. The processing unit 82 is configured to generate price offers according to received non-binding orders. The processing unit 82 is connected to said stock database to provide an automated inventory administration. The online shop server 80 is provided with a customer-history database 90. The customer-history database 90 is connected to the processing unit 82. The procession unit 82 updates the customer-history database 88. The customer-history database 90 stores data related to the entire trading relationship between each a particular customer on one hand and the online shop server on the other hand.

The component for determining a lowest acceptable price for a customer-order combination 92 is provided that is connected to said processing unit 82, to said stock database 88, and to said customer-history database 90. The component for the lowest acceptable price 92 is capable of calculating a profitability limit for each order in relation to the actual available stock data and the actually available customer data. The lowest acceptable price component 92 may use algorithms to evaluate the particular turnover for each customer and other trading-relevant parameters to generate a value representing the willingness of the vendor (or the server) to accommodate the price towards the desires of a customer.

It is also possible to use a trainable system to determine the lowest acceptable price wherein a online shop manager types in a lowest possible price offer for each incoming order. By using e.g. a neuronal networks or fuzzy logic systems, the system can generate the lowest acceptable prices based on a decision history of a human operator, even without a dedicated stock and trading price determination algorithms formulas and trading theory.

The data stored in the customer-history database 90 can also comprise features such as parameters relating to a negotiation behavior or the like.

The online shop server 80 further comprises a component for accepting/rejecting received bid prices 94 and alternate bid prices. The component for accepting/rejecting 94 is connected to the component for determining a lowest acceptable price 92 and to said processing unit 82. The component for accepting/rejecting a received bid price 94 can be embodied as a comparing element for comparing a bid price received from a customer 98 via said network 96, said network interface 84 and via said processing unit 82 with a lowest acceptable price received from component for the lowest acceptable price 92. If the received bid price exceeds the lowest acceptable price, the component for accepting/rejecting 94 informs the processing unit to send a confirmation of said bid price and said order to the customer. The processing unit 82 is then configured to update the databases 86, 88 and 90 is necessary.

The shopping carts or the orders of the customer are being saved for later analysis, compilation of the assortment or stock planning. A sufficient number of offers generate sufficient information basis to enable inexpensive data on elasticity of demand. In addition sales of specific items may be carried out inexpensively and with a particular aim. The parameter controlled online calculation makes higher contribution margins possible. Customer loyalty and online shop acceptance are being enhanced considerably. The price pressure caused by price search engines and price agents is being eased. The online shop system even becomes more attractive and compatible in comparison to online auctions. The reaction time in regard to market changes or altered targets is being reduced substantially.

This application contains the description of implementations and embodiments of the present invention with the help of examples. A person skilled in the art will appreciate that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims. Consequently various options of implementing the invention as determined by the claims, including equivalent implementations, also belong to the scope of the invention.

## Claims

1. Method for technically operating an online shop with an adaptable price feature comprising:
- receiving a customer identification (10) from a customer;
- receiving data representing a non-binding order (12) from said customer;
- generating a price offer in response to said non-binding order and sending data representing said received non-binding order together with said price offer (16) to said customer;
- receiving a rejection of said price offer (18) from said customer;
**characterized by**
- receiving a bid price related to said order (20) from said customer;
- calculating a lowest acceptable price (22) for the present customer-order combination, on the basis of at least available stock data and available customer-history data;
- accepting said bid price, if said bid price exceeds said determined lowest acceptable price; and
- sending a confirmation (28) for said order to said customer.

2. Method according to claim 1, further comprising:
- rejecting said bid price and generating an alternate price offer, based on said generated lowest acceptable price, if said bid price does not exceed said determined lowest acceptable price, and
- sending said alternate price offer to said customer (26).

3. Method according to claim 2, further comprising:
- receiving an acceptation of said alternate price offer and a confirmation of said order (18) from said customer.

4. Method according to claim 2, further comprising:
- receiving a rejection of said alternate price offer from said customer;
- receiving an alternate bid price from said customer,
- generating an alternate lowest acceptable price, based on at least one of said received bid price, said alternate bid price, said generated lowest acceptable price, said price offer and said alternate price offer; and
- accepting said bid price, if said alternate bid price exceeds said generated alternate lowest acceptable price.

5. Method according to anyone of the preceding claims, further comprising receiving a reserve to confirmation from said customer.

6. Method according to anyone of the preceding claims, further comprising at least one of the steps selected from:
- sending and receiving data for log-in procedures to and from said customer;
- sending of range of goods and range of service data to said customer;
- sending an offer to change said non-binding order (14) to said customer;
- sending an offer to present a bid price for said order to said customer;
- receiving an actualized non-binding order from said customer;
- sending finalization of order after confirmation to said customer;
- generating/updating customer-history data;
- sending common terms and conditions of trade to said customer;
- receiving an acceptation of said common terms and conditions of trade from said customer;
- updating said actual-stock data;
- outputting a confirmed order; and
- sending and receiving data for log-off procedures to and from said customer.

7. Computer program product comprising program code means stored on a computer readable medium for carrying out the method of anyone of the preceding claims, when said program product is run on a computer or network device.

8. Computer program product comprising program code, downloadable from a server for carrying out the method of anyone of the preceding claims, when said program product is run on a computer or network device.

9. Online shop server with an integrated price adaptation system comprising:
- a processing unit (82) for processing online shop data and customer interaction data;
- a network interface (84) connected to said processing unit (82) and connectable to a data network (96), for sending to and receiving from a customer device (98) customer interaction data including binding and non-binding orders, customer data, price offers, bid prices and rejection of said price offers and alternate price offers, respectively;
- a customer identification component (86) connected to said network interface and to said processing unit;
- a customer identification database (87) connected to said customer identification component (86), to store customer identifications;
- a stock database (88), connected to said processing unit to store actual stock data, wherein said processing unit (82) is configured to generate price offers according to received non-binding orders, and wherein said processing unit (82) is connected to said stock database (88) to provide an automated inventory administration;
**characterized by**
- a customer-history database (90) connected to said processing unit (82);
- a component for determining (92) a lowest acceptable price for a customer-order combination, connected to said processing unit (82), to said stock database (88), and to said customer-history database (90);
- a component for accepting/rejecting (94) a received bid price, connected to said component for determining (92) a lowest acceptable price, and to said processing unit (82), for accepting a bid price received from a customer for an order.

10. Online shop server according to claim 9 with an integrated price determination system further comprising:
- an alternate price offer generating component, connected to said component for determining (92) a lowest acceptable price, connected to said component for accepting/rejecting received bid prices (94) and connected to said processing unit (82), for subsequently generating alternate price offers.
